# EUROPÄISCHE PATENTSCHRIFT

(11) **EP 0 938 633 B1**
(45) Veröffentlichungstag und Bekanntmachung des Hinweises auf die Patenterteilung: **21.03.2001**
(21) Anmeldenummer: 97910447.8
(22) Anmeldetag: 16.10.1997
(51) Int. Cl.: F16G 13/16

(54) **ENERGIEFÜHRUNGSKETTE UND KETTENGLIED MIT EINEM STARREN STEG**
ENERGY SUPPLY LINE GUIDING CHAIN AND RIGID BAR CHAIN LINK
CHAINE POUR LE GUIDAGE DE LIGNES D'ALIMENTATION EN ENERGIE ET MAILLON A TRAVERSE RIGIDE

(30) Priorität: 25.10.1996 DE 19644468
(43) Veröffentlichungstag der Anmeldung: 01.09.1999
(73) Patentinhaber: Kabelschlepp Gesellschaft mit beschränkter Haftung, 57074 Siegen (DE)
(72) Erfinder: WEHLER, Herbert, D-57290 Neunkirchen (DE)
(74) Vertreter: Kahlhöfer, Hermann, Dipl.-Phys.
(86) Internationale Anmeldenummer: EP9705715
(87) Internationale Veröffentlichungsnummer: WO9819078

(56) Entgegenhaltungen:
- EP-A- 0 693 638
- EP-A- 0 789 167
- DD-A- 265 449
- DE-A- 19 512 088
- GB-A- 1 431 382
- US-A- 4 590 961

## Beschreibung

Die Erfindung bezieht sich auf eine Energieführungskette sowie auf ein Kettenglied für eine Energieführungskette.

Durch die DD 265 449 A1 ist eine Energieführungskette für das Führen von Versorgungsleitungen, die der Versorgung bei Maschinen und beweglichen Teilen dienen, bekannt. Die Energieführungskette umfaßt gelenkig miteinander verbundene Kettenglieder, die einen sich in Längsrichtung der Energieführungskette erstreckenden Kanal begrenzen. Dieser Kanal dient zur Aufnahme von Versorgungsleitungen. Ein jedes Kettenglied weist eine in den Kanal mündende Öffnung auf, durch die die Versorgungsleitungen in den Kanal einbringbar sind. Zur Ausbildung der Energieführungskette schlägt die DD 265 449 A1 vor, daß in ein elastisches Band durch Schnitte quer zur Längsrichtung in gewählten Abständen zueinander und mit gewählter Schnittlänge in ein Zugband mit quer zur Längsrichtung weisenden profilierten Zungen ausgebildet wird. Dadurch, daß die Energiefiihrungskette aus einem elastischen Band besteht, weist diese nur eine geringe Verwindungssteifigkeit auf. Der Einsatzzweck einer solchen Energieführungskette ist daher begrenzt.

Desweiteren ist eine Energieführungskette, umfassend gelenkig miteinander verbundene Kettenglieder, bekannt, wobei die Kettenglieder zwei voneinander beabstandete einander gegenüberliegende durch eine Traverse verbundene Kettenlaschen aufweisen. Jede Kettenlasche weist einen sich zur gegenüberliegenden Kettenlasche erstreckenden Steg auf. Die Stege sind federelastisch.

Die Endabschnitte der Stege überlappen sich. Um eine Versorgungsleitung in den durch solche Kettenglieder gebildeten Kanal einbringen zu können, werden die Stege entsprechend ausgelenkt. Da beim Einbringen einer Leitung in den Kanal die Stege in den Kanal hinein ausgelenkt werden, ist die mögliche Anzahl von Leitungen, die in den Kanal eingebracht werden können, geringer als bei Kettengliedern gleicher Abmessungen mit lösbaren Stegen, wie sie beispielsweise die EP 0 384 153 A2 beschreibt. Dadurch, daß die Stege biegsam sein müssen, und daß Kettenglied mit den Ketten-stegen einsrückig ausgebildet ist, ist ein solches Kettenglied relativ leicht deformierbar.

Hiervon ausgehend liegt der vorliegenden Erfindung die Aufgabe zugrunde, die bekannte Energieführungskette so weiterzubilden, daß bei vereinfachter Einführung von Versorgungsleitungen in einen sich in Längsrichtung der Energieführungskette erstreckenden Kanal, die Energieführungskette verwindungssteif ist. Ein weiteres Ziel der Erfindung ist es, ein Kettenglied anzugeben, welches für eine verwindungssteife Energieführungskette geeignet ist.

Erfindungsgemäß wird diese Zielsetzung durch eine Energieführungskette mit den Merkmalen des Anspruchs 1 bzw. durch ein Ketlenglied mit den Merkmalen des Anspruchs 12 erreicht. Vorteilhafte Weiterbildungen sind Gegenstand der Unteransprüche.

Die Energieführungskette, umfassend gelenkig miteinander verbundene Kettenglieder, die einen sich in Längsrichtung der Energieführungskette erstreckenden Kanal zur Aufnahme von Versorgungsleitungen begrenzen, wobei ein jedes Kettenglied eine in den Kanal mündende Öffnung aufweist, die durch wenigstens einen Steg begrenzt ist, zeichnet sich dadurch aus, daß der Steg starr ist, und die Öffnungen benachbarter Kettenglieder im wesentlichen quer zur Längsrichtung der Energieführungskette versetzt sind. Bei einer solchen Energieführungskette können die Kettenglieder aus einem Kunststoff, insbesondere einem faserverstärkten Kunststoff, bestehen. Geeignet hierzu sind insbesondere Kohlenfaser und/oder glasfaserverstärkte Kunststoffe. Auch der Steg des Kettengliedes ist vorzugsweise aus einem faserverstärkten Kunststoff gebildet. Dadurch, daß die Öffnungen benachbarter Kettenglieder im wesentlichen quer zur Längsrichtung der Energieführungskette versetzt ausgebildet sind, kann eine Versorgungsleitung, die in den sich in Längsrichtung der Energieführungskette erstreckenden Kanal eingesetzt wurde, nicht selbsttätig aus dem Kanal heraustreten, da die einzelnen Stege als Sperrorgane wirken. Durch diese Ausgestaltung der Energieführungskette wird eine hohe Verwindungssteifigkeit derselben erreicht. Solche Energieführungsketten sind auch zur Führung von relativ steifen Versorgungsleitungen geeignet, da die von den Versorgungsleitungen auf einen Steg ausgeübte Kraft durch diesen aufgenommen werden kann, ohne daß eine relevante Durchbiegung des Steges eintritt.

Zur Vereinfachung der Einbringung und Entfernung von Versorgungsleitungen in den Kanal der Energieführungskette wird vorgeschlagen, daß die Öffnungen alternierend um eine sich in Längsrichtung der Energieführungskette erstreckende Grade, vorzugsweise um eine Längsachse, ausgebildet sind. Um die Versorgungsleitungen während des Montiervorganges nicht übermäßig zu biegen, wird vorgeschlagen, daß die Öffnungen auf einer gedachten Linie liegen, die stetig gekrümmt ist. Vorzugsweise sind die Öffnungen auf einer gedachten wellenförmigen, vorzugsweise sinusförmigen, Linie angeordnet.

Für die wirtschaftliche Herstellbarkeit einer Energieführungskette wird vorgeschlagen, daß diese wenigstens eine sich wiederholende Gliedersequenz mit mindestens zwei benachbarten Kettengliedern mit zueinander versetzten Öffnungen aufweist. Insbesondere ist die Energieführungskette durch wenigstens eine sich regelmäßig wiederholende Gliedersequenz gebildet. Bevorzugt ist eine Ausgestaltung der Energieführungskette, bei der diese nur aus einer sich wiederholenden Gliedersequenz besteht. Eine Gliedersequenz umfaßt mindestens zwei benachbarte Kettenglieder, vorzugsweise vier Kettenglieder. Hierdurch kann der Herstellungsaufwand verringert werden, da die Anzahl der Kettengliedervariationen begrenzt wird.

Eine Energieführungskette bei der jedes Kettenglied zwei voneinander beabstandete einander gegenüberliegende Kettenlaschen aufweist, zeichnet sich vorzugsweise dadurch aus, daß wenigstens eine Kettenlasche mindestens einen sich zur gegenüberliegenden Kettenlasche erstreckenden, vor diese endenden, die Öffnung teilweise begrenzenden, Steg aufweist. Vorzugsweise liegen die Stege in einer gemeinsamen Ebene. Besonders bevorzugt ist eine Ausgestaltung der Energieführungskette, bei der die Stege im wesentlichen senkrecht zu den Kettenlaschen verlaufen.

Um während einer Einführung bzw. einer Entfernung der Versorgungsleitung in oder aus dem Kanal diese nicht zu beschädigen, wird vorgeschlagen, daß das freie Ende des Steges konvex gekrümmt ist.

Nach einem anderen erfindungsgemäßen Gedanken wird ein Kettenglied für eine Energieführungskette, mit zwei voneinander beabstandeten, einander gegenüberliegenden, durch eine Traverse verbundene, Kettenlaschen, die teilweise einen sich in Längsrichtung der Energieführungskette erstreckenden Kanal zur Aufnahme von Versorgungsleitungen begrenzen, wobei das Kettenglied eine in den Kanal mündende Öffnung aufweist, die durch wenigstens einen Steg begrenzt ist, vorgeschlagen, bei dem wenigstens eine Kettenlasche mindestens einen starren sich zur gegenüberliegenden Kettenlasche erstreckenden und vor dieser endenden, die Öffnung teilweise begrenzenden, Steg aufweist. Weitere vorteilhafte Ausgestaltungen eines solchen Kettengliedes nach Anspruch 12 sind Gegenstand der Unteransprüche. Die Kettenlasche und der Steg sind vorzugsweise einstückig aus einem faserverstärkten Kunststoff hergestellt. Der faserverstärkte Kunststoff verleiht dem Kettenglied eine hohe Stabilität.

Weitere Merkmale und Einzelheiten werden anhand der in der Zeichnung dargestellten Ausführungsbeispiele erläutert. Es zeigen:
- Figur 1: einen Abschnitt einer Energieführungskette in der Draufsicht,
- Figur 2: ein erstes Ausführungsbeispiel eines Kettengliedes in einer Draufsicht,
- Figur 3: das Kettenglied der Figur 2 in der Seitenansicht von rechts,
- Figur 4: ein zweites Ausführungsbeispiel eines Kettengliedes,
- Figur 5: eine Seitenansicht von rechts des Kettengliedes nach Figur 4,
- Figur 6: ein drittes Ausführungsbeispiel eines Kettengliedes,
- Figur 7: eine Seitenansicht von rechts des Kettengliedes nach Figur 6,
- Figur 8: ein viertes Ausführungsbeispiel eines Kettengliedes in einer Draufsicht,
- Figur 9: eine Seitenansicht von rechts des Kettengliedes nach Figur 8,
- Figur 10: eine Unteransicht eines Kettengliedes.

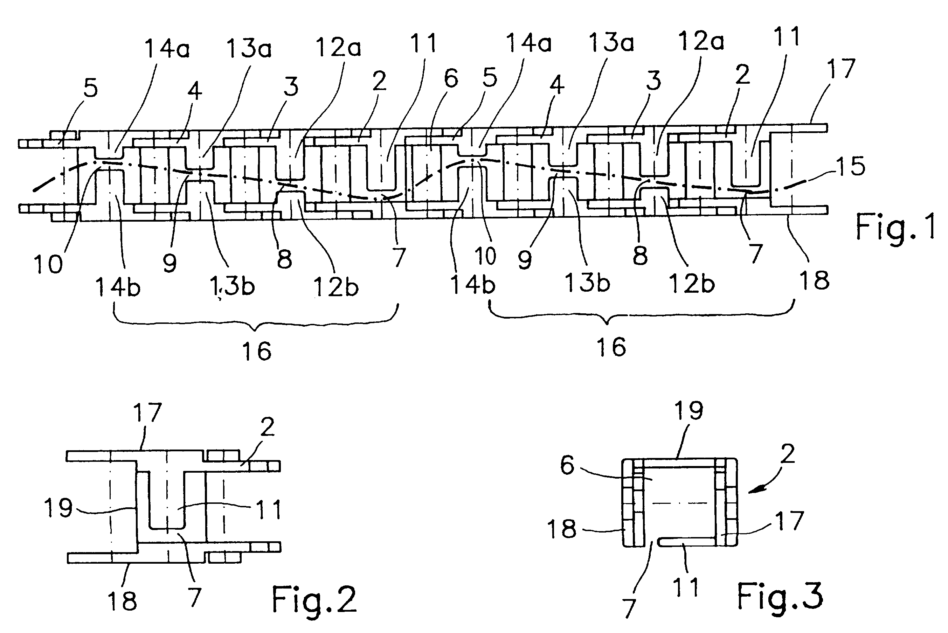

Figur 1 zeigt einen Abschnitt einer Energieführungskette 1. Die Energieführungskette 1 ist durch gelenkig miteinander verbundene Kettenglieder 2, 3, 4 und 5 gebildet. Jedes Kettenglied 2, 3, 4, 5 begrenzt einen sich in Längsrichtung der Energieführungskette 1 erstreckenden Kanal 6. In den Kanal 6 sind nicht dargestellte Versorgungsleitungen einführbar. Jedes Kettenglied 2, 3, 4 und 5 weist zwei voneinander beabstandete, einander gegenüberliegende, Kettenlaschen 17, 18 auf. Die Kettenlaschen 17, 18 sind durch eine Bodenplatte 19 miteinander verbunden. Zur Einführung und Entnahme einer Versorgungsleitung in den Kanal 6 bzw. aus diesen heraus, weist jedes Kettenglied 2, 3, 4 und 5 jeweils eine Öffnung 7, 8, 9 bzw. 10 auf. Die Öffnung 7, 8, 9 bzw. 10 mündet in den Kanal 6. Die Breite der Öffnung 7, 8, 9 bzw. 10 quer zur Längserstreckung der Energieführungskette 1 ist durch den Steg 11 bzw. 12a, 12b; 13a, 13b, 14a, 14b begrenzt. Das Kettenglied 2 weist einen Steg 11, der sich von der Kettenlasche 17 zur gegenüberliegenden Kettenlasche 18 hin erstreckt, wie dies insbesondere aus den Figuren 2 und 3 ersichtlich ist, auf.

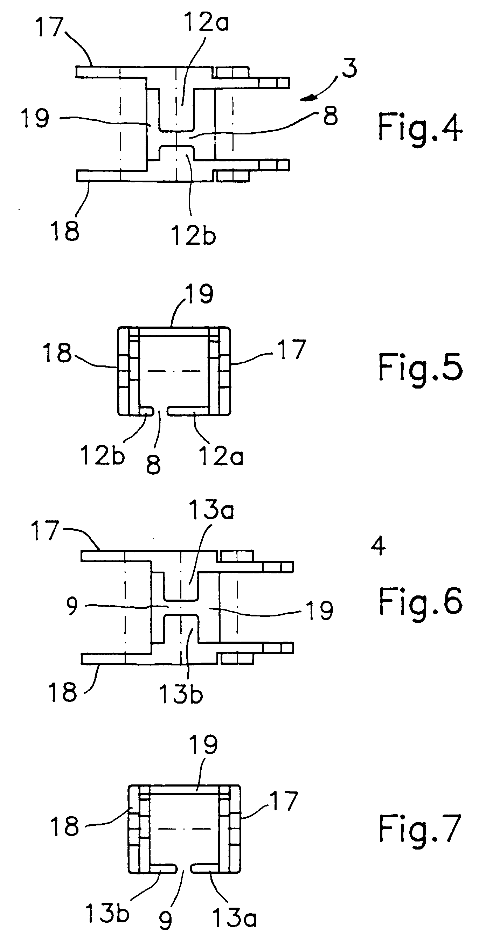

In den Figuren 4 und 5 ist das Kettenglied 3 der Energieführungskette 1 nach Figur 1 dargestellt. Das Kettenglied 3 weist einen Steg 12a, der sich von der Lasche 17 zur Lasche 18 hin erstreckt sowie einen Steg 12b, der sich von der Lasche 18 zur Lasche 17 hin erstreckt, auf. Der Steg 12a und der Steg 12b des Kettengliedes 3 liegen in der gleichen Ebene. Das freie Ende des Steges 12a und des Steges 12b ist, wie aus der Figur 5 ersichtlich ist, konvex gebogen. Zwischen den sich gegenüberliegenden Enden der Stege 12a, 12b ist die Öffnung 8 ausgebildet. Der Abstand der Öffnung 8 ist gegenüber der Öffnung 7 des benachbarten Kettengliedes 2 quer zur Längsrichtung der Energieführungskette versetzt ausgebildet.

Figuren 6 und 7 zeigen das Kettenglied 4 der Energieführungskette 1 nach Figur 1. Das Kettenglied 4 weist zwei im Abstand zueinander ausgebildete Kettenlaschen 17, 18 auf, die jeweils einen Steg 13a bzw. 13b aufweisen. Der Steg 13a erstreckt sich von der Kettenlasche 17 zu der Kettenlasche 18, wobei der Steg 13b sich von der Kettenlasche 18 zu der Kettenlasche 17 erstreckt. Zwischen den freien Enden der Stege 13a, 13b ist eine Öffnung 9 ausgebildet. Wie aus der Figur 1 ersichtlich ist, ist die Öffnung 9 gegenüber der Öffnung 8 des Kettengliedes 3 zur Mitte hin des Kanals versetzt ausgebildet.

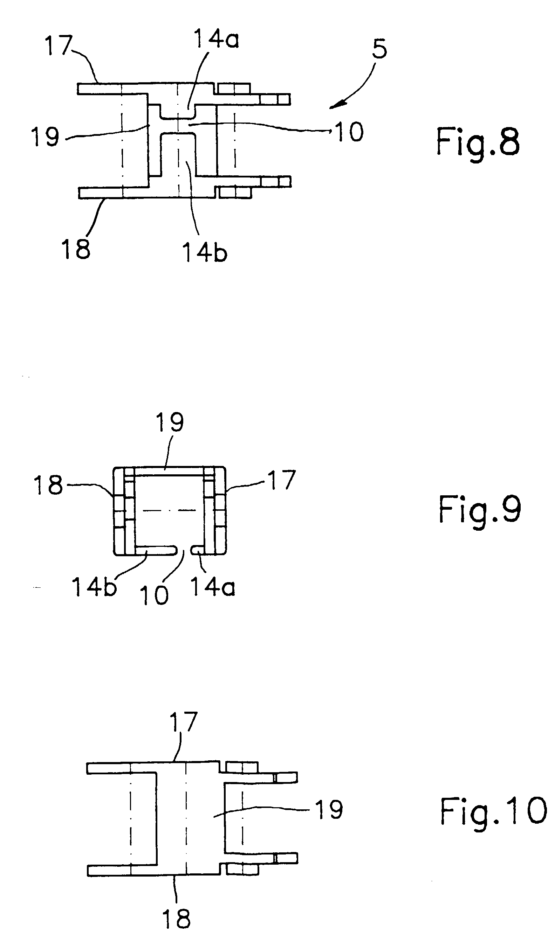

Die Figuren 8 und 9 zeigen das Kettenglied 5 der Energieführungskette 1 nach Figur 1. Das Kettenglied 5 weist ebenfalls zwei im Abstand zueinander angeordnete Kettenlaschen 17, 18, die über eine Platte 19 miteinander verbunden sind, auf. Der Steg 14a erstreckt sich von der Kettenlasche 17 zur Kettenlasche 18 hin. Der Steg 14b erstreckt sich von der Kettenlasche 18 zu der Kettenlasche 17. Die Stege 14a und 14b liegen in einer gemeinsamen Ebene, wie dies insbesondere aus der Figur 9 ersichtlich ist. Die durch die freien Enden der Stege 14a, 14b begrenzte Öffnung 10 liegt näher an der Lasche 17 als an der Lasche 18. Die Öffnung 10 des Kettengliedes 5 ist quer zur Längsrichtung der Energieführungskette 1 gegenüber der Öffnung 9 des Kettengliedes 4 versetzt ausgebildet.

Die Kettenglieder 2, 3, 4 und 5 bilden eine Gliedersequenz 16. In dem in der Figur 1 dargestellten Abschnitt einer Energieführungskette 1 wiederholt sich die Gliedersequenz 16. Es sei angemerkt, daß eine Energieführungskette unterschiedliche Gliedersequenzen 16 aufweisen kann. Zwischen den Gliedersequenzen 16 können auch Kettenglieder anderer Bauart angeordnet sein.

Durch die Wiederholung der Gliedersequenz 16 und die versetzte Ausbildung der Öffnungen 7, 8, 9 und 10 liegen die Öffnungen 7, 8, 9 und 10 der Energieführungskette auf einer stetig gekrümmten gedachten Verbindungslinie 15. Die Krümmung der gedachten Verbindungslinie 15 kann durch den Versatz der Öffnungen zueinander variiert werden.

Die Stege 11, 12a, 12b, 13a, 13b, 14a und 14b sowie die Kettenlaschen 17, 18 und die Platte 19 bestehen aus einem faserverstärkten Kunststoff. Vorzugsweise handelt es sich hierbei um einen glasfaser- und/oder kohlen-stoffaserverstärkten Kunststoff. Durch diese Ausgestaltung der Kettenglieder 2, 3, 4 und 5 wird diesen eine hohe Stabilität verliehen. Die Stege 11, 12a, 12b, 13a, 13b, 14a und 14b sind relativ starr. Versorgungsleitungen, die in den Kanal 6 der Energieführungskette 1 einzubringen sind, werden durch die Öffnungen 7, 8, 9 und 10 hingedrückt. Dadurch, daß die Öffnungen 7, 8, 9 und 10 nicht auf einer gemeinsamen Geraden liegen, wirken die Stege 11, 12a, 12b, 13a, 13b, 14a und 14b als Sperrorgane, wodurch ein Austritt einer Versorgungsleitung aus dem Kanal verhindert wird. Die erfindungsgemäße Energieführungskette ist relativ verwindungssteif. Sie bietet auch eine bessere Ausnutzung des Kanals 6, da beim Einführen einer Versorgungsleitung die Stege 11, 12a, 12b, 13a, 13b, 14a und 14b nicht, oder nur in einem sehr geringen Maße in den Kanal 6 hingedrückt werden. Die Breite der Stege, d. h. deren Erstreckung in Längsrichtung der Energieführungskette, kann an den Verwendungszweck der Energieführungskette angepaßt werden. Sie können genauso breit sein oder breiter als die Platte 19, die die Kettenlaschen 17, 18 miteinander verbindet.

### BEZUGSZEICHENLISTE

- 1: Energieführungskette
- 2,3,4,5: Kettenglied
- 6: Kanal
- 7,8,9,10: Öffnung
- 11,12a,12b, 13a,13b, 14a, 14b: Steg
- 15: Linie
- 16: Sequenz
- 17, 18: Kettenlasche
- 19: Platte

## Patentansprüche

1. Energieführungskette (1), umfassend gelenkig miteinander verbundene Kettenglieder (2, 3, 4, 5), die einen sich in Längsrichtung der Energieführungskette (1) erstreckenden Kanal (6) zur Aufnahme von Versorgungsleitungen begrenzen, wobei ein jedes Kettenglied (2, 3, 4, 5) eine in den Kanal (6) mündende Öffnung (7, 8, 9, 10) aufweist, die durch wenigstens einen Steg (11; 12a, 12b; 13a, 13b; 14a, 14b) begrenzt ist, dadurch gekennzeichnet, daß der Steg (11; 12a, 12b; 13a, 13b; 14a, 14b) starr ist und die Öffnungen (7, 8, 9, 10) benachbarter Kettenglieder (2, 3, 4, 5) im wesentlichen quer zur Längsrichtung der Energieführungskette (1) zueinander versetzt ausgebildet sind.

2. Energieführungskette nach Anspruch 1, dadurch gekennzeichnet, daß die Öffnungen (7, 8, 9, 10) alternierend um eine sich in Längsrichtung der Energieführungskette (1) erstreckende Gerade, vorzugsweise um eine Längsachse, ausgebildet sind.

3. Energieführungskette nach Anspruch 1 oder 2, dadurch gekennzeichnet, daß eine gedachte, die Öffnungen (7, 8, 9, 10) verbindende Linie (15), stetig gekrümmt ist.

4. Energiefiihrungskette nach Anspruch 3, dadurch gekennzeichnet, daß die gedachte, die Öffnungen (7, 8, 9, 10) verbindende Linie (15), einen wellenförmigen, vorzugsweise sinusförmigen, Verlauf hat.

5. Energieführungskette nach einem der Ansprüche 1 bis 4, dadurch gekennzeichnet, daß diese wenigstens eine sich wiederholende Gliedersequenz (16) mit mindestens zwei benachbarten Kettengliedern (2, 3, 4, 5) mit zueinander versetzten Öffnungen (7, 8, 9, 10) aufweist.

6. Energieführungskette nach Anspruch 5, dadurch gekennzeichnet, daß wenigstens eine Gliedersequenz (16) sich regelmäßig wiederholt.

7. Energieführungskette nach Anspruch 5 oder 6, dadurch gekennzeichnet, daß diese eine sich wiederholende Gliedersequenz (16) umfaßt.

8. Energieführungskette nach einem der Ansprüche 1 bis 7, wobei jedes Kettenglied (2, 3, 4, 5) zwei voneinander beabstandete einander gegenüberliegende Kettenlaschen (17, 18) aufweist, dadurch gekennzeichnet, daß wenigstens eine Kettenlasche (17, 18) mindestens einen sich zur gegenüberliegenden Kettenlasche (18, 17) erstreckenden und vor dieser endenden, die Öffnung (7, 8, 9, 10) teilweise begrenzenden, starren Steg (11; 12a, 12b; 13a, 13b; 14a, 14b) aufweist.

9. Energieführungskette nach Anspruch 8, dadurch gekennzeichnet, daß die Stege (11; 12a, 12b; 13a, 13b; 14a, 14b) in einer gemeinsamen Ebene liegen.

10. Energieführungskette nach Anspruch 9, dadurch gekennzeichnet, daß die Stege (11; 12a, 12b; 13a, 13b; 14a, 14b) im wesentlichen senkrecht zu den Kettenlaschen (17, 18) verlaufen.

11. Energieführungskette nach einem der Ansprüche 8 , 9 oder 10, dadurch gekennzeichnet, daß das freie Ende eines Stegs (11; 12a, 12b; 13a, 13b; 14a, 14b) konvex gekrümmt ist.

12. Kettenglied für eine Energieführungskette, mit zwei voneinander beabstandeten, einander gegenüberliegenden, durch eine Platte (19) verbundenen Kettenlaschen (17, 18), die teilweise einen sich in Längsrichtung der Energieführungskette erstreckenden Kanal (6) zur Aufnahme von Versorgungsleitungen begrenzen, wobei das Kettenglied (2, 3, 4, 5) eine in den Kanal (6) mündende Öffnung (7, 8, 9, 10) aufweist, die durch wenigstens einen Steg (11; 12a, 12b; 13a, 13b; 14a, 14b) begrenzt ist, dadurch gekennzeichnet, daß wenigstens eine Kettenlasche (2, 3, 4, 5) mindestens einen starren sich zur gegenüberliegenden Kettenlasche (17, 18) erstreckenden und vor dieser endenden, die Öffnung (7, 8, 9, 10) teilweise begrenzenden, Steg (11; 12a, 12b; 13a, 13b; 14a, 14b) aufweist.

13. Kettenglied nach Anspruch 12, dadurch gekennzeichnet, daß jede Kettenlasche (17, 18) jeweits einen sich zur gegenüberliegenden Kettenlasche (17, 18) erstreckenden Steg (11; 12a, 12b; 13a, 13b; 14a, 14b) aufweist, wobei die freien Enden der Stege (11; 12a, 12b; 13a, 13b; 14a, 14b) die Öffnung (7, 8, 9, 10) begrenzen.

14. Kettenglied nach Anspruch 13, dadurch gekennzeichnet, daß die Stege (11; 12a, 12b; 13a, 13b; 14a, 14b) in einer gemeinsamen Ebene liegen.

15. Kettenglied nach Anspruch 12, 13 oder 14, dadurch gekennzeichnet, daß die Stege (11; 12a, 12b; 13a, 13b; 14a, 14b) im wesentlichen senkrecht zu den Kettenlaschen (17, 18) verlaufen.

16. Kettenglied nach einem der Ansprüche 12 bis 15, dadurch gekennzeichnet, daß das freie Ende eines Stegs (11; 12a, 12b; 13a, 13b; 14a, 14b) konvex gekrümmt ist.

17. Kettenglied nach einem der Ansprüche 12 bis 16, dadurch gekennzeichnet, daß das Kettenglied (2, 3, 4, 5) und der Steg (11; 12a, 12b; 13a, 13b; 14a, 14b) aus einem faserverstärkten Kunststoff besteht.

## Claims

1. An energy guide chain (1) including pivotably interconnected chain links (2, 3, 4, 5) which define a passage (6) extending in the longitudinal direction of the energy guide chain (1), for accommodating supply lines, wherein each chain link (2, 3, 4, 5) has an opening (7, 8, 9, 10) which opens into the passage (6) and which is defined by at least one web (11; 12a, 12b; 13a, 13b; 14a, 14b), characterised in that the web (11; 12a, 12b; 13a, 13b; 14a, 14b) is rigid and the openings (7, 8, 9, 10) of adjacent chain links (2, 3, 4, 5) are provided in mutually displaced relationship substantially transversely with respect to the longitudinal direction of the energy guide chain (1).

2. An energy guide chain according to claim 1 characterised in that the openings (7, 8, 9, 10) are provided alternately about a straight line extending in the longitudinal direction of the energy guide chain (1), preferably about a longitudinal axis.

3. An energy guide chain according to claim 1 or claim 2 characterised in that a notional line (15) connecting the openings (7, 8, 9, 10) is continuously curved.

4. An energy guide chain according to claim 3 characterised in that the notional line (15) connecting the openings (7, 8, 9, 10) is of a wave-shaped and preferably sinusoidal configuration.

5. An energy guide chain according to one of claims 1 to 4 characterised in that it has at least one repeating link sequence (16) with at least two adjacent chain links (2, 3, 4, 5) with mutually displaced openings (7, 8, 9,10).

6. An energy guide chain according to claim 5 characterised in that at least one link sequence (16) is regularly repeated.

7. An energy guide chain according to claim 5 or claim 6 characterised in that it includes a repeating link sequence (16).

8. An energy guide chain according to one of claims 1 to 7 wherein each chain link (2, 3, 4, 5) has two mutually spaced, mutually oppositely arranged chain side plates (17, 18), characterised in that at least one chain side plate (17, 18) has at least one rigid web (11; 12a, 12b; 13a, 13b; 14a, 14b) which extends to the oppositely disposed chain side plate (18, 17) and which terminates before same and which partially defines the opening (7, 8, 9, 10).

9. An energy guide chain according to claim 8 characterised in that the webs (11; 12a, 12b; 13a, 13b; 14a, 14b) are disposed in a common plane.

10. An energy guide chain according to claim 8 characterised in that the webs (11; 12a, 12b; 13a, 13b; 14a, 14b) extend substantially perpendicularly to the chain side plates (17, 18).

11. An energy guide chain according to one of claims 8, 9 and 10 characterised in that the free end of a web (11; 12a, 12b; 13a, 13b; 14a, 14b) is convexly curved.

12. A chain link for an energy guide chain, comprising two mutually spaced, mutually oppositely disposed chain side plates (17, 18) which are connected by a plate portion (19) and which partially define a passage (6) extending in the longitudinal direction of the energy guide chain, for accommodating supply lines, wherein the chain link (2, 3, 4, 5) has an opening (7, 8, 9, 10) which opens into the passage (6) and which is defined by at least one web (11; 12a, 12b; 13a, 13b; 14a, 14b), characterised in that at least one chain side plate (2, 3, 4, 5) has at least one rigid web (11; 12a, 12b; 13a, 13b; 14a, 14b) which extends to the oppositely disposed chain side plate (18, 17) and which terminates before same and which partially defines the opening (7, 8, 9, 10).

13. A chain link according to claim 12 characterised in that each chain side plate (17, 18) has a respective web (11; 12a, 12b; 13a, 13b; 14a, 14b) which extends to the oppositely disposed chain side plate (17, 18), wherein the free ends of the webs (11; 12a, 12b; 13a, 13b; 14a, 14b) define the opening (7, 8, 9, 10).

14. A chain link according to claim 13 characterised in that the webs (11; 12a, 12b; 13a, 13b; 14a, 14b) are disposed in a common plane.

15. A chain link according to claim 12, claim 13 or claim 14 characterised in that the webs (11; 12a, 12b; 13a, 13b; 14a, 14b) extend substantially perpendicularly to the chain side plates (17, 18).

16. A chain link according to one of claims 12 to 15 characterised in that the free end of a web (11; 12a, 12b; 13a, 13b; 14a, 14b) is convexly curved.

17. A chain link according to one of claims 12 to 16 characterised in that the chain link (2, 3, 4, 5) and the web (11; 12a, 12b; 13a, 13b; 14a, 14b) comprises a fibre-reinforced plastics material.

## Revendications

1. Chaîne de guidage pour la transmission d'énergie(1) comprenant des maillons de chaîne (2, 3, 4, 5) reliés entre-eux de manière articulée qui pour le logement de conduites d'alimentation délimitent un canal (6) s'étendant en direction longitudinale de la chaîne de guidage pour la transmission d'énergie (1), chaque maillon de chaîne (2, 3, 4, 5) présentant une ouverture (7, 8, 9, 10) débouchant dans le canal (6) et qui est délimitée par au moins une entretoise (11; 12a, 12b; 13a, 13b; 14a, 14b), caractérisée en ce que l'entretoise (11; 12a, 12b; 13a, 13b; 14a, 14b) est rigide et que les ouvertures (7, 8, 9, 10) de maillons de chaîne adjacents (2, 3, 4, 5) sont réalisées décalées les unes par rapport aux autres sensiblement en direction transversale par rapport à la direction longitudinale de la chaîne de guidage pour la transmission d'énergie (1).

2. Chaîne de guidage pour la transmission d'énergie selon la revendication 1, caractérisée en ce que les ouvertures (7, 8, 9, 10) sont réalisées alternantes autour d'une droite, de préférence autour d'un axe longitudinal, s'étendant en direction longitudinale de la chaîne de guidage pour la transmission d'énergie (1).

3. Chaîne de guidage pour la transmission d'énergie selon la revendication 1 ou 2, caractérisée en ce qu'une ligne imaginaire (15) reliant les ouvertures (7, 8, 9, 10) est continuellement courbée.

4. Chaîne de guidage pour la transmission d'énergie selon la revendication 3, caractérisée en ce que la ligne imaginaire (15) reliant les ouvertures (7, 8, 9, 10) a une allure ondulatoire, de préférence une allure sinusoïdale.

5. Chaîne de guidage pour la transmission d'énergie selon l'une des revendications 1 à 4, caractérisée en ce que celle-ci présente au moins une séquence de maillons se répétant (16) avec au moins deux maillons de chaîne adjacents (2, 3, 4) avec des ouvertures (7, 8, 9, 10) décalées les unes par rapport aux autres.

6. Chaîne de guidage pour la transmission d'énergie selon la revendication 5, caractérisée en ce qu'au moins une séquence de maillons (16) se répète régulièrement.

7. Chaîne de guidage pour la transmission d'énergie, selon la revendication 5 ou 6, caractérisée en ce que celle-ci comprend une séquence de maillons se répétant (16).

8. Chaîne de guidage pour la transmission d'énergie, selon l'une des revendications 1 à 7, chaque maillon de chaîne (2, 3, 4, 5) présentant deux joues de chaîne (17, 18) écartées l'une de l'autre et opposées, caractérisée en ce qu'au moins une joue de chaîne (17, 18) présente au moins une entretoise rigide (11; 12a, 12b; 13a, 13b; 14a, 14b) s'étendant vers la joue opposée (18, 17), terminant devant cette dernière et délimitant partiellement l'ouverture (7, 8, 9, 10).

9. Chaîne de guidage pour la transmission d'énergie, selon la revendication 8, caractérisée en ce que les entretoises (11; 12a, 12b; 13a, 13b; 14a, 14b) se trouvent dans un plan commun.

10. Chaîne de guidage pour la transmission d'énergie, selon la revendication 9, caractérisée en ce que les entretoises (11; 12a, 12b; 13a, 13b; 14a, 14b) s'étendent sensiblement en direction verticale par rapport aux joues de chaîne (17 18).

11. Chaîne de guidage pour la transmission d'énergie, selon l'une des revendications 8, 9 ou 10, caractérisée en ce que l'extrémité libre d'une entretoise (11; 12a, 12b; 13a, 13b; 14a, 14b) est courbée de façon convexe.

12. Maillon de chaîne pour une chaîne de guidage pour la transmission d'énergie avec deux joues de chaîne (17, 18) écartées l'une de l'autre, opposées et étant reliées par une plaque (19) et qui délimitent partiellement un canal (6) pour le logement de conduites d'alimentation s'étendant en direction longitudinale de la chaîne de guidage pour la transmission d'énergie, le maillon de chaîne (2, 3, 4, 5 ) présentant une ouverture (7, 8, 9, 10) débouchant dans le canal (6), l'ouverture (7, 8, 9, 10) étant délimitée par au moins une entretoise (11; 12a, 12b; 13a, 13b; 14a, 14b), caractérisé en ce qu'au moins une joue de chaîne (2, 3, 4, 5) présente au moins une entretoise rigide (11; 12a, 12b; 13a, 13b; 14a, 14b) s'étendant vers la joue opposée (17, 18), terminant devant cette dernière et délimitant partiellement l'ouverture (7, 8, 9, 10).

13. Maillon de chaîne, selon la revendication 12, caractérisé en ce que chaque joue de chaîne (17, 18) présente respectivement au moins une entretoise (11; 12a, 12b; 13a, 13b; 14a, 14b) s'étendant vers la joue de chaîne opposée (17, 18), les extrémités libres des entretoises (11; 12a, 12b; 13a, 13b; 14a, 14b) délimitant l'ouverture (7, 8, 9, 10).

14. Maillon de chaîne, selon la revendication 13, caractérisé en ce que les entretoises (11; 12a, 12b; 13a, 13b; 14a, 14b) se trouvent dans un plan commun.

15. Maillon de chaîne, selon la revendication 12, 13 ou 14, caractérisé en ce que les entretoises (11; 12a, 12b; 13a, 13b; 14a, 14b) s'étendent sensiblement en direction verticale par rapport aux joues de chaîne (17, 18).

16. Maillon de chaîne, selon l'une des revendications 12 à 15, caractérisé en ce que l'extrémité libre d'une entretoise (11; 12a, 12b; 13a, 13b; 14a, 14b) est courbée de façon convexe.

17. Maillon de chaîne, selon l'une des revendications 12 à 16, caractérisé en ce que le maillon de chaîne (2, 3, 4, 5) et l'entretoise (11; 12a, 12b; 13a, 13b; 14a, 14b) sont constitués d'une matière plastique renforcée par fibres.
